# EUROPÄISCHE PATENTSCHRIFT

(11) **EP 1 470 608 B1**
(45) Veröffentlichungstag und Bekanntmachung des Hinweises auf die Patenterteilung: **04.04.2007**
(21) Anmeldenummer: 02776845.6
(22) Anmeldetag: 19.10.2002
(51) Int. Cl.: H01M 10/40, H01M 4/48

(54) **LITHIUM-IONEN-BATTERIE**
LITHIUM ION BATTERY
BATTERIE AUX IONS DE LITHIUM

(30) Priorität: 23.10.2001 DE 10152220
(43) Veröffentlichungstag der Anmeldung: 27.10.2004
(73) Patentinhaber: Hessel, Reinhard, 42579 Heiligenhaus (DE)
(72) Erfinder: HESSEL, Reinhard, 42579 Heiligenhaus (DE); MICOV, Miroslav, 841 03 Bratislava (SK); GRIGORTSCHAK, Ivan, Ivanovitsch, Zabolotiv, 78315 (UA)
(86) Internationale Anmeldenummer: PCT/DE2002/003955
(87) Internationale Veröffentlichungsnummer: WO 2003/038939

(56) Entgegenhaltungen:
- WO-A-01/29915
- JP-A- 51 083 128
- PATENT ABSTRACTS OF JAPAN vol. 1997, no. 09, 30. September 1997 (1997-09-30) & JP 09 115505 A (SANYO ELECTRIC CO LTD), 2. Mai 1997 (1997-05-02)

## Beschreibung

Die Erfindung betrifft eine Lithiumionen - Batterie gemäß den Patentansprüchen.

### Stand der Technik

Aus dem Fachbuch Elektrochemie, 3. Auflage von 1998, erschienen im WILEY-VCH Verlag, S. 457, 458, ist eine sekundäre Lithium-Batterie bekannt, deren Kathode aus Kohlenstoff, bspw. aus Graphit, und deren Anode aus einer lithiumhaltigen Legierung bestehen. Derartige Batterien weisen jedoch nur eine relativ geringe Energiespeicherkapazität pro Batteriegewicht auf und erlauben zudem nur eine relativ geringe Anzahl von Lade-Entladezyklen.

Zudem sind aus dem Stand der Technik Batterien mit Lithiumanoden bekannt, deren Kathoden aus den folgenden Materialien hergestellt sind:
- Mangandioxyd (MnO2) mit einer Energiespeicherkapazität von weniger als 750 Wattstunden pro kg Kathodenmaterial,
- einer Kohlenstoff-Fluor-Verbindung mit der Formel (CFx)n mit einer Energiespeicherkapazität von weniger als 900 Wattstunden pro kg Kathodenmaterial
- Cobaltdioxyd mit einer Energiespeicherkapazität von weniger als 1200
- Wattstunden pro kg Kathodenmaterial

Als sekundäre Batterie wird eine wideraufladbare Batterie (Akkumulator) verstanden. Eine primäre Batterie wird dagegen nur für einen Entladevorgang eingesetzt.

### Die Erfindung und ihre Vorteile:

Die erfindungsgemäße Lithiumionen-Batterie mit dem kennzeichnenden Merkmal des Hauptanspruches hat demgegenüber die Vorteile, sowohl die Energiespeicherkapazität pro Batteriegewicht als auch die Anzahl der möglichen Lade-Entladezyklen erheblich zu vergrößern.

Weitere Vorteile und vorteilhafte Ausgestaltungen der Erfindung sind der nachfolgenden Beschreibung, den Zeichnungen und den Ansprüchen entnehmbar.

### Zeichnungen:

Ein Ausführungsbeispiel der Erfindung wird im Folgenden anhand zweier Zeichnungen beschrieben. Es zeigen:
Fig. 1 eine schematische Darstellung der erfindungsgemäßen Lithiumionen-Talk-Batterie und
Fig. 2 eine typische Entladungskurve einer Lithimumionen-Talk-Batterie gemäß der Erfindung.

In den Zeichnungen bedeuten 1 eine Lithiumionen-Batterie, 2 deren Gehäuse, 3 die erste Elektrode (Kathode) aus Talk, 4 den Separator, 5 die zweite Elektrode (Anode) aus Lithium oder Graphit, 6 und 7 einen ersten beziehungsweise zweiten elektrischen Anschluss und 8 die Entladungskurve einer Lithiumionen-Talk-Batterie.

### Beschreibung des Ausführunsgbeispiels:

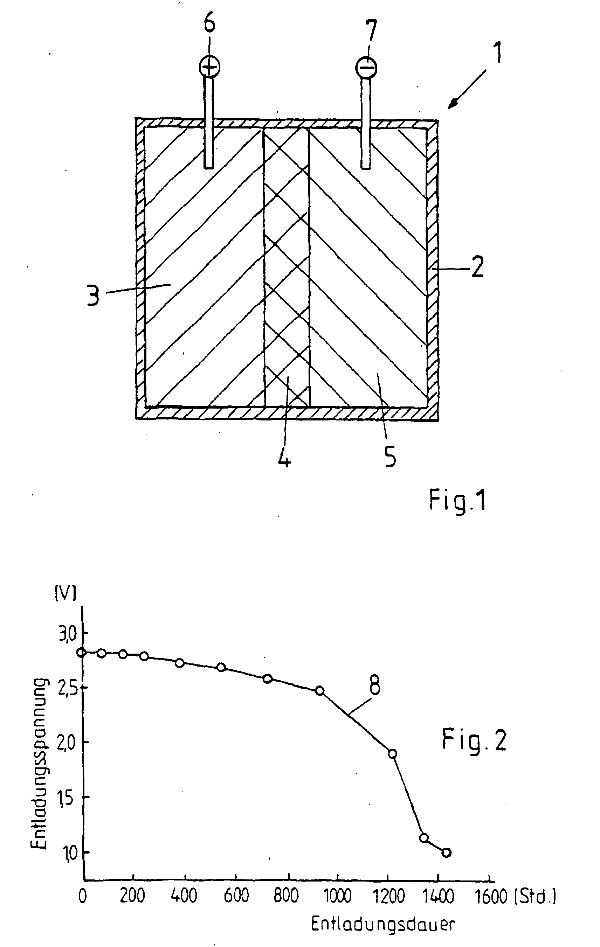

Figur 1 zeigt eine schematisch dargestellte Lithiumbatterie 1, die ein Gehäuse 2 aufweist, in dem schichtförmig eine erste aus Talk bestehende Elektrode 3, die mit Elektrolyt getränkt ist, einen Separator 4 und eine zweite aus Lithium bestehende Elektrode 5, die mit Elektrolyt getränkt ist, angeordnet sind. Die erste Elektrode 3 ist mit einem ersten elektrischen Anschluss 6 verbunden und bildet die Kathode der Lithiumbatterie 1, die zweite Elektrode 5 ist mit einem zweiten Anschluss 7 verbunden und bildet die Anode der Batterie. Der Elektrolyt, besteht aus y-Butyrolacton (C4H6O2), in dem das Lithiumsalz, Lithiumtetrafluorborat, (LiBF4), gelöst ist, wobei eine 1-molare bis 1,2-molare Lösung von Lithiumtetrafluorborat in y-Butyrolacton angestrebt wird.
Die Lithium-Talk-Zelle weist hierbei eine Spannung von ca. 2,8 Volt auf und kann beim Entladen einen Strom von mindestens 2mA/cm2 Elektrodenoberfläche liefern. Ohne dass die Zelle Verschleisserscheinungen zeigt, ist sie zu mindestens 300 Lade-Entladezyklen geeignet.
Praktisch ist mit einer Lithium-Talk-Batterie eine Energiespeicherkapazität von mehr als 3000 Wattstunden pro kg aktivem Kathodenmaterial erreichbar.

Figur 2 zeigt eine experimentell ermittelte Entladungskurve 8 einer Lithiumionen-Talk-Zelle gemäss der Erfindung, die deren außergewöhnliche Energiespeicherkapazität demonstriert. Die hierbei untersuchte Lithiumionen-Talk-Zelle hatte eine scheibenförmige runde Form, war 1,5 mm dick und wies einen Durchmesser von 20 mm auf. Ihr Gewicht betrug ca. 2 Gramm. Die Lithiumionen-Talk-Zelle wurde hierbei über einen 1,4 k Ohm-Widerstand entladen, wobei ein Strom von ca. 2 mA floss. Deutlich ist zu erkennen, dass die Spannung der Lithiumionen-Talk-Zelle im frisch geladenen Zustand 2,8 V beträgt, im Verlauf einer Entladungsdauer von ca. 900 Stunden auf ca. 2,5 V absinkt und nach einer Entladungsdauer von 1200 Stunden noch ca. 2 V beträgt.

Hierdurch ergibt sich für die untersuchte Lithiumionen-Talk-Zelle eine Energiespeicherkapazität pro aktivem Kathodenmaterial von mehr als 3000 Watt-Stunden pro kg.

Die erfindungsgemäßen Batterien sind in üblicher Weise wideraufladbar (Akkumulatoren, sekundäre Batterien), können aber auch nur für einen Entladungsvorgang ausgelegt werden.

### (Primäre Batterien)

Verwendbar ist die erfindungsgemäße Lithiumionen-Batterie zur autonomen Energieversorgung von Geräten der Elektrotechnik und Elektronik, wobei als besonders vorteilhaft anzusehen ist, dass als Kathodenmaterial ein in der Natur vorkommendes Mineral verwendet wird. Derartige Materialien sind besonders preisgünstig und können auf umweltfreundliche Art entsorgt werden. Zu diesem Zweck wurden bereits Natur-Materialien aus der Gattung der Montmorillonite als Kathodenmaterialien getestet. Die Nachteile dieser Materialien aber bestehen darin, dass die Energiespeicherkapazität pro Gewicht damit gebauter Batterien zu gering ist, und dass auch die Zahl der mit derartigen Batterien möglichen Lade-Entladezyklen sehr begrenzt ist. Diese Nachteile werden von der vorliegenden Lithiumionen-Batterie mit einer Talk-Elektrode gemäss der Erfindung vermieden.
Talk, aus dem die erste Elektrode 3 besteht, ist ein Phyllosilikat (Blattsilikat, Schichtsilikat) mit der Formel Mg3 Si4 O10 (OH)2, das pulverisiert beispielsweise Talkum ergibt, und das eine Dichte von 2,6 bis 2,8 g/cm3 und eine Mohshärte von 1 aufweist. Es ist durch eine sphäroidische Kristallstruktur charakterisiert, d.h., es weist die Struktur eines kugelförmigen, radialsymmetrisch aus Kristallfasern aufgebauten Sphärokristalles auf.
Talk ist durch hydrothermale Umwandlung magnesiumreicher Gesteine entstanden und kommt in großem Umfang in der Natur vor. Es handelt sich hierbei also um ein sehr preisgünstiges Material.

Talk als Material gehört zur Gruppe der Dielektrika. Seine nur kleine elektrische Leitfähigkeit kann mit Hilfe der einer Me-Legierung und/oder Halogen-Legierung verbessert werden. Die Legierung wird durch Ionenaustausch erreicht.

Das erfindungsgemäß eingesetzte Material Talk bedeutet Talk Mg3 Si4 O10 (OH)2 selbst oder ein Material, in welchem das Mg ganz oder teilweise durch ein mindestens dreiwertiges Metall, wie Al, dreiwertiges Fe oder Chrom oder andere ersetzt ist. Man kann solche Materialien durch die Formel Mg(3-x) (Me)x Si4 O10 (OH)2 ausdrücken, in der Me für zwei Valente eines der genannten mindestens dreiwertigen Metalle, die zwei Valente Mg ersetzen, und x für den Ausdruck x=0 bis 3 stehen; x braucht keine ganze Zahl zu sein.

Es hat sich weiterhin als vorteilhaft erwiesen, den Talk oder das beschriebene Talk-Gemisch mit elementarem Halogen, wie Fluor, Chlor, Brom, und/oder Jod, bevorzugt Fluor und/oder Jod, besonders bevorzugt Jod, zu legieren.

Durch diese zweite Halogen-Legierung entsteht unter Einbeziehung der ersten Me-Legierung modifizierter Talk der Formel

Mg₍₃₋ₓ₎MeₓSi₄O_{10-y}(HAL)y(OH)₂.

wobei Me das genante Metall bedeutet und HAL das genannte Halogen in Form eines Halogenions bedeutet. Das mindestens 3-wertiges Me ersetzt das 2-wertige Mg im Kristallgitter. Analog ersetzt das 1-wertige HAL das 2-wertige O.

Hierbei steht y für den Ausdruck y=0 bis 10; y braucht keine ganze Zahl zu sein. Für Me wird 3-wertiges Fe, Al, Cr oder anderes dem Fachmann bekanntes Me, vorzugsweise Chrom benutzt.

Entsprechende Schichtgittereinheiten können durch die Halogen-Legierung auch aus den anderen genannten talkähnlichen Materialien entstehen.

Erfindungsgemäß einsetzbares Material kann auch ein durch Na-Ionen angereichertes Schichtsilikat, wie Na8 {(AlO2) 8 (SiO2)40}* 24H20 oder

Na6{(AlO2)6 (SiO2)50}*24H2O sein.

Alle diese Materialien, auch die erwähnten Talk-Legierungen werden für die vorliegende Erfindung als Talk bezeichnet.

Die sehr gute Eignung von Talk als Kathode einer sekundären oder primären Lithiumionen-Batterie ist noch nicht vollständig untersucht, aber möglicherweise damit begründbar, dass bei Lithiumionen-Batterien positive Lithiumionen reversibel beim Laden der Batterie in Wirtsgitter eingelagert und beim Entladen der Batterie daraus ausgelagert werden. Dieser Vorgang wird Interkalation und die dieses Wirtsgitter zur Verfugung stellende Elektrode somit lnterkalationselektrode genannt. Bei Experimenten erwies sich Talk als besonders gut geeignet zur Verwendung als Interkalationselektrode, da Talk 6 bis 8 Lithiumionen pro elementarer kristalliner Talkzelle aufnehmen kann und sich beim Interkalationsprozess bez. Deinterkalationsprozess selbst nicht verändert sondern sich als sehr stabil erweist.

Talk für die erste Elektrode 3 ist erfindungsgemäß Talk allein oder im Gemisch mit einen oder mehreren anderen Materialien. Der Talkanteil der ersten Elektrode 3 beträgt demnach 1-100 Vol.-%, bevorzugt 10-100 Vol. -%, besonders bevorzugt 30-100 %, ganz besonders bevorzugt 60-100 Vol.-%, bezogen auf das Gesamtvolumen von Talk und anderen Materialien als Kathodenmaterial.
Die anderen Materialien sind solche mit einer höheren elektrischen Leitfähigkeit als Talk und können beispielsweise Halbleiter umfassen und sogar Materialien sein, die für sich allein schlechtere Ergebnisse als mit den erfindungsgemäßen Batterien ergeben haben. Solche anderen Materialien sind beispielsweise BiCl3, Bi2Se3, Bi2Te3, analoge Verbindungen von Indium, Gallium und Germanium, Fe3O4, sowie Metalle und Halbmetalle, wie Ga, In, Ge, Ni, Al, Cr oder Cu in elementarer Form, sowie Russ, wie Acetylenruss, oder thermogespaltener Graphit. Gute Ergebnisse werden mit einem Volumenanteil von 5-40 %, bevorzugt 15-30 % an anderen Materialien, bezogen auf die Gesamtmenge an Talk und anderen Materialien, erzielt.

Talk oder das Gemisch aus Talk und anderen Materialien wird in einer Korngröße von 0,01-1, bevorzugt 0,05-0,5 Mikron eingesetzt.

Der Talk oder das Gemisch aus Talk werden in einer Lösung eines Polymers aufgeschlämmt, auf einer geeigneten Unterlage aufgebracht und mit einem elektrischen Anschluss verbunden. Der elektrische Anschluss ist beispielsweise ein schmaler Streifen Kupferblech. Das Polymer dient als Binder für den Talk oder das Gemisch aus Talk und ist auf dem Gebiet der Batterieherstellung bekannt, ebenso wie Lösungsmittel für solche Polymeren. Nicht einschränkend und nur als Beispiel sei Teflon als 4-8 Gew.- %ige Lösung in Aceton genannt. Ein typisches Gewichtsverhältnis beträgt etwa 80 % Talk, 15 % Material mit höherer elektrischer Leitfähigkeit als Talk und 5 % Binderpolymer. Diese Prozentwerte können im Rahmen der Beschreibung so variieren, dass die Gesamtmenge stets 100 % ergibt, bezogen auf ihr Gesamtgewicht.

Als Unterlage für die Aufschlämmung von Talk oder Gemisch in der Polymerlösung kommt ein übliches Stützmaterial, wie Kupferfolie, Aluminiumfolie oder Ähnliches in Frage, das mechanische Festigkeit gewährleistet und gleichzeitig die elektrische Ableitung darstellt. In fachmännisch bekannter Weise wird für eine elektrische Isolierung gegenüber der zweiten Elektrode 5 gesorgt.

Die zweite Elektrode 5 kann Lithiumionen aufnehmen und entladen und ist elektrisch leitend; solche Elektrodenmaterialien sind für die Batterieherstellung bekannt. Erwähnt seien Lithium in Form von dünnem Metallblech, vorwiegend eingesetzt für primäre Batterien, und Graphit in gepresster Form, mit Vorteil eingesetzt für sekundäre Batterien.

Der Separator 4 ist eine nur für Ionen durchlässige Membran, wie sie bei der Batterieherstellung bekannt ist. Der Separator 4 trennt die erste Elektrode 3 von der zweiten Elektrode 5.

Die erste Elektrode 3 und die zweite Elektrode 5 sind mit Elektrolyt getränkt.

Der Elektrolyt ist eine Lösung eines Lithiumsalzes in einem aprotonischen sauerstoffhaltigen Lösungsmittel. Lithiumsalze sind beispielsweise LiBF4, Li-acetat, Li-propionat und weitere Li-Salze, die in solchen Lösungsmitteln löslich sind. Geeignete Lösungsmittel sind beispielsweise flüssige offenkettige oder cyclische Ester, Ether oder Ketone; bevorzugt wird ein Ester, beispielsweise ein cyclischer Ester, wie y-Butyrolacton, eingesetzt. Das Li-Salz liegt als 0,1-3-molare Lösung, bevorzugt als 0,5-2-molare Lösung vor. Der Elektrolyt wird in wasserfreier Form eingesetzt. Er enthält weniger als 0,1 Gew.- %, bevorzugt weniger als 0,05 Gew.- % Wasser, bezogen auf sein Gesamtgewicht.

Nach einer vorteilhaften Ausgestaltung der Erfindung ist als Elektrolyt in y-Butyrolacton (C4H6O2) gelöstes Lithiumtetrafluorborat (LiBF4) vorgesehen, wobei der Elektrolyt als 1-molare bis 1,2-molare Lösung von Lithiumtetrafluorborat in y-Butyrolscton ausgebildet ist. Hierdurch werden hohe Austauschströme zwischen den Elektroden der Lithiumbatterie ermöglicht und elektrochemische Nebenreaktionen minimiert.

Die erfindungsgemäße Lithiumionen-Batterie kann in allen üblichen Formen hergestellt werden, etwa als Stabbatterie, beispielsweise für Taschenlampen und größere Geräte, als so genannte "Knopf" batterie, beispielsweise für Uhren, Hörgeräte und kleine Geräte, in gewickelter oder gefalteter Form, wie sie bei Kondensatoren gebräuchlich ist, oder in noch weiteren Formen.

Alle zur Herstellung der erfindungsgemäßen Lithiumionen-Batterie, wie oben beschrieben, benutzten Stoffe und Materialien sind bekannt. Die Herstellung der Teile der erfindungsgemäßen Batterie und ihre Zusammenfügung zur erfindungsgemäßen Gesamtbatterie 1 erfolgt nach den auf dem Gebiet der Batterieherstellung bekannten Verfahren.

## Patentansprüche

1. Lithiumionen-Batterie 1 mit einer ersten Elektrode 3 als Kathode, mit einer zweiten Elektrode als Anode 5, mit einer zwischen beiden Elektroden angeordneten Membran als Separator 4, mit den Anschlüssen 6 und 7 an den Elektroden, mit einem die genannten Teile aufnehmenden Gehäuse 2 und mit einem Lithiumionen enthaltenden Elektrolyten, mit dem die Elektroden 3 und 5 getränkt sind , **dadurch gekennzeichnet**, **das** die erste Elektrode 3 aus Talk, oder einem Gemisch, das Talk enthält, besteht.

2. Lithiumionen-Batterie nach Anspruch 1, **dadurch gekennzeichnet, dass** das Talk-Gemisch 1-100 Vol.-%, bevorzugt 10-100 Vol.-%, besonders bevorzugt 30-100 Vol.-%, ganz besonders bevorzugt 60-100 Vol.-%, bezogen auf das Gesamtvolumen der Mischung, an Talk enthält.

3. Lithiumionen-Batterie nach Anspruch 2, **dadurch gekennzeichnet, dass** als Gemischbestandteil im Talk-Gemisch, BiCl3, Bi2Se3, Bi2Te3, analoge Verbindungen von Indium, Gallium und Germanium, Fe3O4, sowie Metalle und Halbmetalle, wie Ga, In, Ge, Ni, Al, Cr oder Cu in elementarer Form, Russ, Acetylenruß oder thermogespaltener Graphit in einem Anteil von 5-40 Vol.- % bevorzugt 15-30 Vol.- %, bezogen auf das Gesamtvolumen des Gemisches eingesetzt wird.

4. Lithiumionen-Batterie nach Anspruch 1, **dadurch gekennzeichnet, dass** der Talk oder das Talk-Gemisch in einer Korngröße von 0,01-1 Mikron, bevorzugt 0,05- 0,5 Mikron eingesetzt wird.

5. Lithiumionen-Batterie nach Anspruch 1, **dadurch gekennzeichnet, dass** der Talk oder das Talk-Gemisch mit drei- oder höher wertigen Metallen und/oder Halogeniden legiert wird nach der Formel
Mg₍₃₋ₓ₎MeₓSi₄O_{10-y}(HAL)y(OH);
x steht für die Zahl 0 bis 3, y steht für die Zahl 0 bis 10; x und y brauchen keine ganzen Zahlen zu sein.

6. Lithiumionen-Batterie nach Anspruch 6, **dadurch gekennzeichnet, dass** das legierte Metall Fe, Al, Ti, Cr bevorzugt Cr ist, und das legierte Halogen F, Cl, Br oder Jod, bevorzugt Jod ist.

7. Lithiumionen-Batterie nach Anspruch 1, **dadurch gekennzeichnet, dass** der Talk oder das Talk-Gemisch ganz oder teilweise durch Na-Ionen angereicherter Talk ist, nach der Formel
Na8 {(AlO2) 8 (SiO2)40} * 24H2O
oder
Na6{(AlO2) 6 (SiO2)50}*24H2O.

8. Lithiumionen-Batterie nach Anspruch 1, **dadurch gekennzeichnet, dass** die zweite Elektrode 5 aus Lithium oder Graphit besteht.

## Claims

1. Lithiumion battery 1 with the first electrode 3 as a cathode, with the second electrode as anode 5, with a built-in membrane between both electrodes as a separator 4, with connectors 6 and 7 on electrodes, with a casting 2 which includes all mentioned parts with a lithimumion electrolyte, that the electrodes are being filled with, marked by that, that the first electrode 3 is created by talc or a mixture of talc.

2. Lithimion battery as in right 1, marked by that, that a talc mixture includes 1-100 vol.%, preferably 10-100 vol.%, especially preferably 30-100 vol.%, much especially preferably 60-100 vol.% concerning the total volume of the mixture is created by talc.

3. Lithiumion battery as in right 2, marked by that, that one of the mixture elements in the talc mixture is created by BiCl3, Bi2Se3, Bi2Te3, analog compounds of Indium, Gallium and Germanium, Fe304 as well as metals and semi-metals like Ga, In, Ge, Ni, Al, Cr, or Cu in elementary form, black or acetylene black or thermal splitted graphite in the share of 4 - 40 vol.% preferably 15-30 vol.% concerning the total volume of the mixture are used.

4. Lithiumion battery as in right 1 marked by that, that there is used a talc of granulity 0,01 - 1 micron, preferably 0,05-0,5 micron.

5. Lithiumion battery as in right 1 marked by that, that the talc or the talc mixture is enriched with trivalent or higher metals or halogens according to formula
Mg₍₃₋ₓ₎Me₍ₓ₎Si₄O_{10-y}(HAL)y(OH);
x represents a digit 0 to 3, y represents a digit 0 to 10; x and y do not need to be whole digits.

6. Lithiumion battery as in right 1 marked by that, that the enriched metal is Fe, Al, Ti, Cr, preferably Cr, and that the enriched halogen is F, Cl, Br or iodine preferably iodine.

7. Lithiumion battery as in right 1 marked by that, that the talc or talc mixture is in whole or partially enriched by Na-ions according to formula
Na8 {(AlO2) 8 (SiO2)40}*24H2O
or
Na6 {(AlO2) 6 (SiO2)50}*24H2O.

8. Lithiumion battery as in right 1 marked by that that the second electrode 5 is created from lithium or graphite.

## Revendications

1. La batterie lithium-ion 1 est composée d'une première électrode 3 (cathode), d'une deuxième électrode (anode 5), séparées par une membrane (séparateur 4) ; de raccordements 6 et 7 aux électrodes ; d'un boitier 2 ; et d'un électrolyte contenant des ions lithium dont les électrodes 3 et 5 sont imprégnées. La première électrode 3 contient du talc ou un mélange contenant du talc.

2. D'après le point 1, la batterie lithium-ion contient un mélange à base de talc composé de 1-100 Vol.-% (10-100 Vol.-% est privilégié, 30-100 Vol.-% est particulièrement privilégié, 60-100 Vol.-% est fortement privilégié) de talc par rapport au volume total du mélange.

3. D'après le point 2, la batterie lithium-ion contient un mélange à base de talc contenant BiCl3, Bi2Se3, Bi2Te3, de l'indium, du gallium et du germanium, Fe304, mais aussi des métaux et non-métaux, comme Ga, In, Ge, Ni, Al, Cr ou Cu, de la suie, de la suie d'acétylène ou du graphite d'une quantité égale à 5-40 Vol.-% par rapport au volume total du mélange.

4. D'après le point 1, dans la batterie lithium-ion les particules du talc ou du mélange contenant le talc ont une taille de 0,01-1 micron. Un diamètre de 0,05-0,5 micron est privilégié.

5. D'après le point 1, la batterie lithium-ion contient un talc ou un mélange de talc avec des métaux et des halogènes.
La formule :
Mg₍₃₋ₓ₎MeₓSi₄O_{10-y}(HAL)y(OH);
x est compris entre 0 et 3, y entre 0 et 10, x et y ne sont pas forcément des nombres entiers.

6. D'après le point 5, dans la batterie lithium-ion il y a un alliage de Fe, Al, Ti, Cr (Cr est privilégié) ; et un mélange d'halogènes F, Cl, Br ou iode (l'iode est privilégié).

7. D'après le point 1, la batterie lithium-ion contient un talc ou mélange à base de talc qui est entièrement ou en partie enrichi par des ions sodiums ; la formule:
Na8 {(AlO2) 8 (SiO2)40}*24H2O
ou
Na6 {(AlO2) 6 (SiO2)50}*24H2O

8. D'après le point 1, dans la batterie lithium-ion la deuxième électrode 5 est en lithium ou en graphite.
